(19) Europäisches Patentamt
European Patent Office
Office européen des brevets

(11) **EP 4 498 556 A1**

(12) **EUROPEAN PATENT APPLICATION**

(43) Date of publication:
**29.01.2025 Bulletin 2025/05**

(51) International Patent Classification (IPC):
**H02J 3/18** (2006.01)     **H02J 3/38** (2006.01)

(21) Application number: 23188019.6

(52) Cooperative Patent Classification (CPC):
**H02J 3/18; H02J 3/1892;** H02J 3/381

(22) Date of filing: **27.07.2023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Siemens Energy Global GmbH & Co. KG**
**81739 München (DE)**

(72) Inventors:
• **Craciun, Bogdan**
**18069 Rostock (DE)**
• **Schumann, Sven**
**91452 Wilhermsdorf (DE)**
• **Loku, Fisnik**
**90768 Fürth (DE)**
• **Calic, Nemanja**
**91052 Erlangen (DE)**

(54) **ELECTROLYSIS SYSTEM COMPRISING AN ELECTROLYSIS PLANT AND A RE-NEWABLE ENERGY PLANT AND METHOD FOR CONTROLLING AN ELECTROLY-SIS SYSTEM**

(57)     The present invention relates to an electrolysis system (100) comprising a renewable power generation plant (1), an electrolysis plant (3) and an AC bus bar (5), wherein the renewable power generation plant (1) is connected to the public electricity grid at a point of connection (POC) and comprises a power plant controller (7) and a self-controlled converter (9) that is connected to the AC bus bar (5). The electrolysis plant (3) comprises an electrolysis active power controller (11) and a converter arrangement (13) that is connected to the AC bus bar (5), and wherein the electrolysis active power controller (11) is configured for controlling active power (P) of the electrolysis plant (3) at the AC bus bar (5) and the power plant controller (7) is configured for controlling reactive power (Q) at the point of connection (POC).

FIG 1

**Description**

The present invention relates to an electrolysis system comprising an electrolysis plant and a renewable energy plant. Furthermore, the invention relates to a method for controlling the electrolysis system.

Electrolysis is a widely known electro-chemical method, wherein a direct (electrical) current (DC) is used to drive an otherwise non-spontaneous chemical reaction. Electrolysis has recently received high attention as a factor in fighting against climate change, as it may be utilized in so-called "power to X" processes. In said processes, a supply medium (such as water or $CO_2$) is generally converted by means of renewable electrical energy into chemical energy via electrolysis. The electrolysis products containing this energy ranging from e.g. hydrogen $H_2$ (with $O_2$ as by-product) over small hydrocarbons like methane $CH_4$ (also termed "synthetic natural gas" SNG or synthetic LNG in its liquid form), ethylene $C_2H_4$ or ethanol $C_2H_5OH$ to ammonia $NH_3$ or carbon monoxide CO. Said molecules may be used as fuel, e.g. for vehicles or generators, or as feedstock for the chemical industry.

An electrolysis system is a device that uses electricity from an electrical power source to convert substances (electrolysis). Corresponding to the variety of different electrochemical electrolysis processes, also a high number of different electrolysis systems a proposed, such as an electrolysis system for water electrolysis.

Hydrogen is a particularly environmentally friendly and sustainable energy source. It has the unique potential of realizing energy systems, transportation systems and large parts of chemical industry without COz emissions. For this to succeed, however, the hydrogen must not come from fossil sources, but must be produced with the help of renewable energies. At least a growing proportion of the electricity generated from renewable sources is now being fed into the public grid. Thus, according to the electricity mix, at least a corresponding and increasing proportion of green hydrogen can be generated if an electrolysis system is operated with electricity from the public grid.

Hydrogen is nowadays generated from water, for example, by means of a proton exchange membrane (PEM) electrolysis or an alkaline electrolysis. The electrolysis systems use electrical energy to produce hydrogen and oxygen from the water supplied. This process takes place in an electrolysis stack composed of several electrolysis cells. Several electrolysis cells are connected in series to form an electrolysis module, or module for short. Several modules in turn are connected in series to form an electrolysis stack. Water is introduced as a reactant into the electrolysis stack, which is under direct current (DC voltage), and after the water has flowed through the electrolysis cells, two fluid streams emerge as electrolysis products, consisting of water and gas bubbles ($O_2$ and $H_2$) .

In general, said electrolysis process needs to be supplied with a predictable power input. Whereas the generation of renewable energy is known to provide a fluctuating power due to various reasons. For example, the amount of generated energy is dependent on weather conditions or on the position of the sun. Further, the amount of generated energy depends on the current season as well as on the course of the day. To protect electrolysis cells from damage caused by fluctuations in the input power, they must be operated in such a way that no energy shortage occurs during operation. To this end, generated power cannot be consumed entirely, but has sometimes to be partly wasted.

It is therefore very desirable to combine in an electrolysis system a renewable energy plant directly with an electrolysis plant to produce hydrogen to obtain in the best mode hydrogen that is 100% generated from a renewable energy source or at least based on a high portion of renewable energy generation and exhibits only a minor consumption, in case needed only, of electricity from the public grid with fossil-based power contributions.

It is an object of the invention to improve operational behaviour in a combined renewable and electrolysis plant at reduced installation costs.

This object is solved by an electrolysis system comprising a renewable power generation plant, an electrolysis plant and an AC bus bar, wherein the renewable power generation plant is connected to the electricity grid at a point of connection and comprises a power plant controller and a self-controlled converter that is connected to the AC bus bar, wherein the electrolysis plant comprises an electrolysis active power controller and a converter arrangement that is connected to the AC bus bar, and wherein the electrolysis active power controller is configured for controlling active power of the electrolysis plant at the AC bus bar and the power plant controller is configured for controlling reactive power at the point of connection.

Furthermore, this object is solved by a method for operating a corresponding electrolysis system, wherein the active power of the electrolysis plant is controlled at the AC bus bar of the electrolysis system, and wherein the reactive power is controlled from the power plant controller of the renewable power generation plant at the point of connection for the overall electrolysis system.

Every grid operator, every region and every country impose different technical requirements when it comes to connecting renewable power generation plant, like a photovoltaic power plant, to the transmission or distribution system. International grid codes differ from German ones but on the European level the Network Code (NC) Requirements for Generators (RfG) harmonize all national grid connection requirements across Europe. Within the EU all national grid codes have to be in-line with the NC RfG since April 27, 2019. The international requirements continuously increase and their diversity is enormous.

The invention is advantageously addressing and fulfilling the requirements of grid stability while it enables that only a minimum power consumption from the grid in case needed is resulting. With this solution the electrolysis system can be operated at a high share close to 100% of renewable energy consumption that is generated from the renewable energy plant. The consumption from the public electricity grid is available as a back-up only with the combined renewable energy plant and electrolysis plant of the invention and its control concept.

Furthermore, high efforts and system costs of existing electrolysis systems that are usually installed together with a combined unit for reactive power compensation and filtering of harmonics can be avoided. This reduces production costs and operational of the electrolysis system.

Within this control concept a self-controlled or voltage source converter in the renewable power generation plant is incorporated and operated to enable advantageously an independent control of the active and the reactive power. This can be achieved by controlling separately the corresponding components in the dq-reference frame of the AC current at the converter terminals. Here, the active or the reactive power control loops generally represent the outer control loops and the AC current control loops in the dq-reference frame represent the respective inner control loops. The inner-control loops then provide the corresponding firing signals to converters of the converter arrangement of the electrolysis plant.

With the concept the electrolysis active power controller is configured for controlling active power of the electrolysis plant at the AC bus bar at medium voltage level. The power plant controller is configured for controlling reactive power of the overall combined system at the point of connection. Only active power of electrolysis system is controlled at the medium voltage bus of the overall electrolysis system. The renewable power generation plant controls reactive power for the overall electrolysis system at the point of connection. The active power of the renewable power generation plant can be controlled at the POC by

$$P_{RP,ref} = P_{POC,measured} - P_{Transformer,losses} - P_{EL,ref}$$

In the control concept $P_{RP,ref}$ means the reference power of the renewable power generation plant, $P_{POC,measured}$ means the power measured at the point of connection, $P_{Transformer,losses}$ means transformation losses, in particular due to the power extraction from the public electricity grid and transformation to a defined medium voltage level required on the AC bus bar of the electrolysis system. The advantage of this solution is that reactive power of an electrolysis converter in the converter arrangement is handled by the self-controlled converter that are installed in the renewable power generation plant. In addition, the renewable power generation plant and the electrolysis plant are functionally divided in the control concept of the invention and can independently control the active power. Therefore, unlike other similar system configurations, which use hybrid controller coordinating the active power control loops between the two systems, here such a hybrid controller is not needed. This further reduced the costs. Furthermore, the two plants facilities can be easier evaluated separately.

In an advantageous embodiment of the electrolysis system the electrolysis active power controller is connected to an AC power input of the power plant controller by means of an inverting device, so that a compensation of harmonics on the AC bus bar involved from a thyristor-based converter in the converter arrangement during operation is achieved.

In case a combined plant is installed according to the invention, there is no need for additional filtering and compensation units, as the harmonic filtering and reactive power compensation can be achieved by the corresponding control of the renewable power generation plant. This approach reduces costs and footprint, if the self-controlled voltage source converters of the renewable power generation plant is utilized.

Considering that the inner-control loops are faster than their outer control loops, they can be advantageously used for harmonic filtering. This can be achieved by extracting the harmonics present in the measured AC current in the AC bus bar and injecting their opposite value at the AC current controller input of the power plant controller, thereby significantly reducing them. A complete cancelation of the harmonics is due to the involved controller time constant might not be achieved but a significant reduction. The outer-control loops on the other hand can be used to control the active power flow into the electrolysis plant, as well as the reactive power flow separately. Considering this, a reactive power compensation can be achieved.

There are several applications of the control concept possible, where self-controlled converters might be available in a renewable power generation plant behind the point of connection (POC) of a electrolysis system. They can be advantageously utilized and operated for reactive power compensation and filtering: photovoltaics converters, wind turbine converters onshore or offshore, converters from biomass and hydro power applications, HVDC converters, or non-thyristor-based converters for parallel electrolysis plants.

In a further advantageous embodiment of the electrolysis system the power plant controller and the electrolysis active power controller are configured such that an independent control of active power of the electrolysis plant and of the renewable power generation plant is obtained respectively.

In another advantageous embodiment of the electrolysis system the converter arrangement of the electrolysis plant comprises a number of thyristor-based converters that are connected in parallel with their respective AC input to the AC bus bar.

The system is scalable and particularly also a plurality of thyristor-based converters can be applied to supply high currents for operating a large power electrolysis plant with a plurality of electrolysers. This can be adapted and scaled accordingly depending on the power available from the renewable power generation plant.

In another advantageous embodiment of the electrolysis system the electrolysis active power controller is connected to the thyristor-based converters such that in operation a control of the active power at the respective DC-output of a thyristor-based converter to a set point ($P_{set}$) of the electrolysis plant (3) is achieved.

It is possible that in the converter arrangement of the electrolysis plant the thyristor-based converters are controlled and operated at an individual set point, so that the electrolyser load and supply of electrolysis DC current can be specifically adjusted for an electrolyser. With this concept the power consumption used for electrolysis can be balanced out with the production of renewable power, particularly to avoid or minimize utilization of power from the public grid at the point of connection.

In a further advantageous embodiment of the electrolysis system the renewable power generation plant comprises a photovoltaic plant with a plurality of voltage-source converters connected with their AC-output to the AC bus bar.

Photovoltaic plants feature converters which must fulfil very high requirements for grid compatibility. As a result this type of converter is able to compensate and filter for other units, in general, if applied appropriately. Depending on the power ratio between the renewable power generation plant and the electrolysis plant, the voltage-source converters of a photovoltaic plant can handle the negative grid impact of the thyristor rectifiers in the converter arrangement of the electrolysis plant completely. To do so, the control loops of the different converts are beneficially combined in the control concept.

In another advantageous embodiment of the electrolysis system the renewable power generation plant comprises a wind power plant with a wind power plant controller that is configured to provide the requested reactive power requirement based on their load profile.

The control electrolysis system and the operational control concept is flexibly applicable to a wind power plant installed at the point of connection for renewable power generation in onshore or offshore applications.

To achieve this the onshore and offshore wind power plant controller is configured to deliver the requested reactive power requirement based on the on their load profile. For example, type 3 (DFIG) or type 4 (Full power converter) wind turbine topologies have the capability to ensure the necessary power requirement needed for example by a power-to-X plant in the nearby, that comprises an electrolysis plant. As for a photovoltaic plant the active power of the wind power plant can be advantageously controlled at the point of connection according to the above indicated balance equation. The control loops of the other renewable applications can be applied the same way.

Similarly, the converter systems from other types of renewable power generation plants, such as biomass, hydro - even green-fuel driven gas turbines and other power generators -, can be beneficially utilized and for serving for an efficient filtering of the harmonics and reactive power compensation when being installed and connected to an electrolysis plant in the electrolysis system.

In a particularly advantageous embodiment of the electrolysis system a storage equipment is installed to provide a back-up power supply such that power intake from the public electricity grid at the point of connection is reduced.

A battery or any other storage equipment can be primarily used to back-up the required power needed to reduce the power intake from the grid. The active front end of battery plant or battery installation is then able to provide the necessary reactive power needed for example by a power-to-X plant arranged in a system with an electrolysis plant. The battery installation can be used in the same way.

It is also possible the self-controlled HVDC converters are used. They are able to provide sufficient reactive power and active filtering, similar to photovoltaic converters as described above.

In another advantageous embodiment of the electrolysis system In the converter arrangement an IGBT-based converter is installed so that a combination of thyristor-based converters and of at least one non-thyristor-based converter is provided, the latter enabling an operation mode at a low current.

In this hybrid configuration the converter arrangement that in operation is supplying the electrolysers of the electrolysis plant comprises also a number of non-thyristor-based converters for supplying DC current to electrolysers that are connected in parallel to the AC bus bar. Especially for electrolysis applications featuring a lower current, the application of non-thyristor-based converters is advantageously applicable and recommended. These self-controlled converters can also be used to provide reactive power compensation and active filtering of harmonics from the thyristor-based converters. A combination of thyristor-based converters and IGBT-based converters in the converter arrangement offers high operational flexibility and part-load behaviour. Both types of converters can be flexibly and independently operated depending on the overall renewable power that is generated and load conditions in the electrolysis plant.

A reduced installation size can be realized with this dual-type converter arrangement of the electrolysis plant. Furthermore, an excessive consumption of reactive power from the public electricity grid can be avoided and a better grid compliance in operation can be achieved.

An improved and advantageous control scheme can be realized for an electrolysis system, like an application in a power-to-X plant. This can be implemented by hierarchical control loops that are foreseen in a practical solution as a possible application: The power-to-X plant is then expected to be connected to the distribution system operators (DSO) controller via the existing communication protocol. Active power production forecast of the renewable power generation plant is known and can be send in advance to the power-to-X to match. As an alternative or in addition to a forecast active power production can be monitored in real time. Based on the load profiles the same can be requested to the converter of the self-controlled converter of the renewable power generation plant, like a PV/solar-, wind-, HVDC, biomass- or hydro converter, in case if the renewable power generation plant is in the vicinity of the power-to-X plant. Based on the forecast of the renewable power generation plant further optimizations can be implemented inside the renewable power generation plant.

Power-to-X plants - such as for methanol or ammonia production - require stable production loops and therefore are inflexible to changes in renewable power production. Still if a certain flexibility of operation is achieved the power-to-X plant - excluding the electrolysers - shall optimize its output based on a certain forecast of the renewable power production to minimize the grid energy imports that is still to a high amount based on coal-, gas- and/or oil-based generation. At the same time power-to-X is required to keep a low LCOA (levelized cost of Ammonia) or LCOMeOH (levelized cost of methanol). The controller can request a certain overpower production profile to the plant controller of the renewable power generation plant for short periods of time to minimize the grid energy imports. Storage installation - like battery arrangements - are advantageously installed up to a certain percentage from installed capacity to guarantee the certificate of origin generation scheme.

The new approach and feature introduced by the power-to X plants (hydrogen, ammonia, methanol) is the operation scheme: Firstly, the Certification of origin control scheme, that requires 100% green energy consumption output: hydrogen, ammonia, methanol). Secondly, a maximization of Levelized cost - shades of green: percentages (%) of energy are absorbed from the grid to minimize the cost. Thirdly, the hybrid scheme of converters n the converter arrangement leads to an advantageous reduction of the grid power infeed. The transmission system operator (TSO) and DSO will see this power as parasitic power (generation & consumption) and will sell / buy it for very low amounts. This energy should be considered in the plant controller optimization and power reference distribution to the power-to-X plant and to the renewable power generation plant.

According to another aspect of the invention in the method for operating an electrolysis system the active power of the electrolysis plant is controlled at the AC bus bar of the electrolysis system the reactive power is controlled from the power plant controller of the renewable power generation plant at the point of connection for the overall electrolysis system. With this control scheme that is underlying the method for operating the electrolysis system a functional separation with an inner control loop and an outer control loop is implemented.

Advantageously in the method the active power of the renewable power generation plant is controlled from the power plant controller at the point of connection.

In a further beneficial execution of the method a storage equipment is provided that is operated such as to reduce the electrical power intake from the public electricity grid at the point of connection.

The control scheme for operating the electrolysis system according to the method is characterized with an inner control loop and an outer control loop. This separation is very advantageously applicable when self-controlled or voltage source converters provided in the renewable power generation plant are being used and operated accordingly. This is because self-controlled or voltage source converters have independent control of the active and the reactive power. This can be achieved by controlling separately the corresponding components in the dq-reference frame of the AC current at the converter terminals. Here, the active or the reactive power control loops generally represent the outer control loops and the AC current control loops in the dq-reference frame represent the respective inner control loops. The inner-control loops then provide the corresponding firing signals to the thyristor-based converters in the converter arrangement of the electrolysis plant. Considering that the inner-control loops are faster than their outer control loops, they can be used for harmonic filtering. This can be achieved by extracting the harmonics present in the measured AC current and injecting their opposite value at the AC current controller input, thereby significantly reducing them.

Therefore, in a further particular advantageous embodiment of the method the AC current is measured, and the opposite value of the AC current is injected at the input of the power plant controller, thereby significantly reducing the harmonics incurred with the thyristor-based converter during operation.

A AC current is preferably measured and determined firstly at the AC bus bar at a defined AC medium voltage level that is provided from the from the secondary side of a transformer station. The primary side on a high AC voltage level of the transformer station is connected to the electricity grid at the point of connection. Secondly, the AC current at the primary side of the transformer is also measured. Both the AC current that is measured at the primary side and the inverted (negative) AC current at medium voltage level measured at the AC bus bar are added and as such superimposed. The subtraction is being realized be an inverter device that is applied to the AC current at medium voltage level of the AC bus bar. With this circuitry an effective compensation and cancelation of harmonics from the thyristor operation can be achieved. The resulting AC current from this superposition is then directed to an AC input of the power plant controller installed in the renewable power generation plant.

The properties, features and advantages of the invention described above, as well as the manner in which they are achieved, will be explained in more detail in connection with the figures in the following description of the example and variations thereof. The example and the corresponding variations serve to explain the invention and do not limit the invention to the combinations of features indicated therein, even with respect to functional features. Moreover, any of the features disclosed in the example below may be considered in isolation and suitably combined with the features of any of the above embodiments and their further aspects.

It is shown in:

FIG 1     an example of an electrolysis system comprising a combination of a photovoltaic plant and an electrolysis plant;

FIG 2     a schematic illustration of the control concept to operate the electrolysis system.

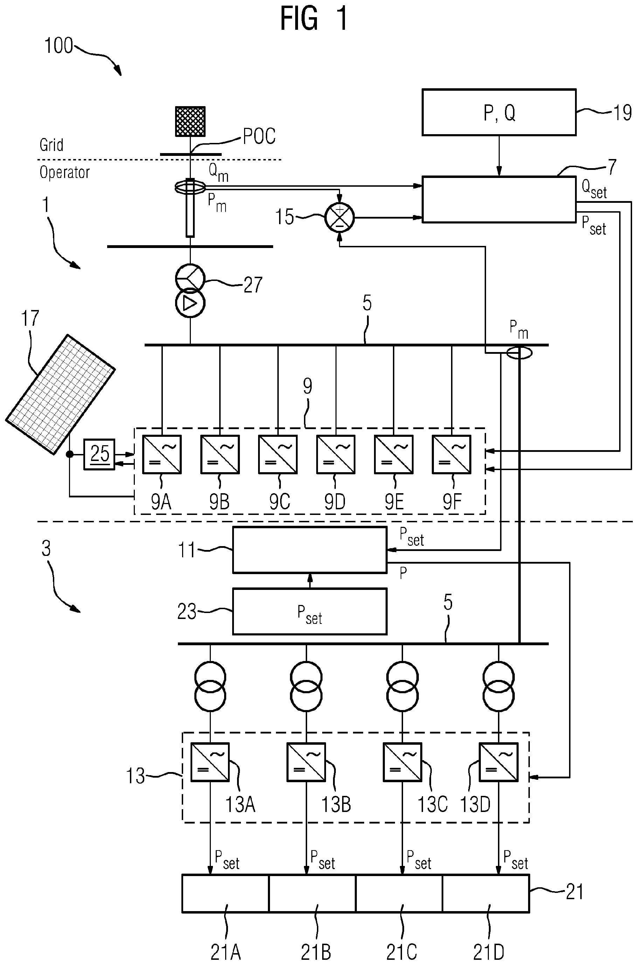

FIG 1 shows a schematic view of an example of an electrolysis system 100. Said electrolysis system 100 comprises an electrolysis plant 3 and a renewable power generation plant 1 in a combination that are both connected to a common AC bus bar 5 that operates at medium-voltage level. The renewable power generation plant 1 comprises a photovoltaic plant 17. The renewable power generation plant 1 is exemplary a photovoltaic plant 17. Additionally or alternatively, said renewable power generation plant 1 can also comprise a wind power plant or a concentrated solar power plant or other types of plants for renewable energy generation, like biomass- or hydro based, or combinations thereof. In the present example the power plant controller 7 is configured as a solar power plant controller and installed such as to control the photovoltaic plant 17. The renewable energy plant 1 comprises a self-controlled converter 9 that consists of a plurality of self-controlled converters 9A, 9B, 9C, 9D, 9E, 9F or voltage-source-converters (VSC). The power plant controller 7 receives a predetermined reference frame 19 for the active power $P$ and the reactive power $Q$ - the power factor - of the renewable power generation plant 1. Hence, also in the example of a photovoltaic plant 17 connected to the public electricity grid ant the POC a setpoint value for active power $P_{set}$ and a setpoint value for reactive Power $Q_{set}$ is provided. As the level of Grid-Connected PV penetration continues to rise, the importance of power factor and power factor correction is going to become increasingly relevant both from the perspective of the grid and the customer. The phase angle is given by the angle between the active power vector, and apparent power vector. Power factor can then be calculated by taking the cosine of this angle. As reactive power is increased, the phase angle also increases, resulting in a lower power factor.

A voltage source converter (VSC) that is as a converter 9 used is a self-commutated converter for HVDC technology. It is also referred to as a 4-quadrant converter because it mutates the incoming AC voltage into a DC voltage by means of a rectifier, transmits it via the HVDC line and converts it into an AC voltage by means of an inverter at the end of the HVDC line. For the conversion, the DC voltage signal is clocked with power semiconductors such as IGBTs by means of pulse width modulation. The switched-mode alternating voltage has the mains frequency and is formed into a sinusoidal signal via filters. The advantage of VSC technology is that the control and regulation are extremely efficient due to the use of power semiconductors. For example, the active power and the reactive power can be controlled independently of each other. In addition to the two-phase VSC converter with pulse width modulation, there is also the method of the multi-level VSC converter, the modular multilevel converter (MMC). Another method for AC voltage conversion works with the Line Commutated Converter (LCC).

The AC output of the self-controlled converter 9 is connected to the AC bus bar 5. The AC bus bar 5 is connected or coupled to the public electricity grid at a point of connection POC via a transformer station 27. The transformer station 27 transforms the AC voltage level from the high voltage level provided on its primary side from the public electricity grid to a predetermined operational medium-voltage level that is provided at the central AC bus bar 5 of the electrolysis system 100. The electrolysis plant 3 is also connected and coupled to the same AC bus bar 5, so that active power $P$ can be provided to the electrolyser arrangement 21 in operation in order to run the electrolysis process. The electrolyser arrangement comprises a number of electrolysers 21A, 21B, 21C, 21D that are connected in parallel to the AC bus bar 5 respectively. Preferably the active power $P$ is to a large extend or nearly 100% provided from the renewable power generation plant 1. To do so the electrolysis plant 3 comprises an electrolysis active power controller 11 and a converter arrangement 13, the latter is connected to the AC bus bar 5. The electrolysis active power controller 11 receives a setpoint value $P_{set}$ for active power from an operator device 23. The setpoint value $P_{set}$ for the electrolysis can be realized for example by a predetermined stored parameter or a stored operational load curve that is also adaptable and configurable during operation or as needed in view of the production needs of Hydrogen and of the available or forecasted active power $P$ from the renewable power generation plant 1.

The converter arrangement 13 has a plurality of converters 13A, 13B, 13C, 13D that each are connected to a respective electrolyser 21A, 21B, 21C, 21D for an individual supply with DC current to run the electrolysis process at a setpoint value $P_{set}$ of active power. The AC input of the converters 13A, 13B, 13C, 13D are connected to the AC bus bar 5 to receive the active power.

Within this plant concept of the electrolysis system 100 the electrolysis plant 3 comprises an electrolysis active power controller 11 and a converter arrangement 13 that is connected to the AC bus bar 5. The electrolysis active power controller 11 is configured for controlling active power P of the electrolysis plant 3 at the AC bus bar 5 and the power plant controller 7 is configured for controlling reactive power Q at the point of connection POC. Furthermore, in the electrolysis system 100 and the underlying control concept the electrolysis active power controller 11 is connected to an AC power input of the power plant controller 7 by means of an inverting device 15 by virtue of which a compensation of harmonics on the AC bus bar 5 involved from a thyristor-based converter 13A, 13B of the converter arrangement 13 during operation is achieved. In general, preferably for high current operation of an electrolyser 21A, 21B, 21C, 21D, in the electrolysis system 100 the converter arrangement 13 of the electrolysis plant 3 comprises a respective number of thyristor-based converters 13A, 13B, 13C, 13D that are connected in parallel with their respective AC input to the AC bus bar 5. However, it is also possible and advantageous for operational flexibility at lower currents that in the plant concept in the converter arrangement 13 a number of IGBT-based converter is installed. With this hybrid configuration a combination of thyristor-based converters 13A, 13B, and of at least one or more non-thyristor-based converter 13C, 13D for example is provided, the latter converters 13C, 13D then particularly enable an improved and most efficient operational mode at a low current.

Furthermore, a controllable storage equipment 25 is installed. With this a back-up power supply is realized such that power intake can be reduced from the public electricity grid at the point of connection POC. The storage equipment can be an arrangement of batteries for example, that is loaded and unloaded as in a controlled manner as required. In the present example the storage equipment 25 is advantageously connected to the photovoltaic plant 17 at its DC output in parallel to its direct DC supply connection to the self-controlled converter 9. It is also possible that a suitable storage equipment 25 is arranged on the AC side, if feasible, for example connected to the AC bus bar 5. This is an option in cases where the storage equipment 25 provides an AC power as output when being discharged. The storage equipment 25 is enabled for a bidirectional operation and can be loaded as needed from the excess energy that is available on the AC bus bar 5 in case of a reduced consumption from the electrolysis plant 3 and/or higher power provided at the AC bus bar 5.

The electrolysis system 100 implements a control concept, where the power plant controller 7 and the electrolysis active power controller 9 are configured such that an independent control of active power P of the electrolysis plant 3 and of the renewable power generation plant 1 is obtained respectively. The electrolysis active power controller 11 is connected to the converter arrangement 13 such that in operation a control of the active power P at the respective DC-output of a converter 13A, 13B, 13C, 13D to a set point $P_{set}$ of the electrolysis plant 3 is achieved. The converter arrangement 13 comprise thyristor-based type converters 13A, 13B and can also comprise some self-controlled converter 13C, 13D or combinations thereof. Preferably for an improved operational flexibility of the electrolysis system 100 in the converter arrangement 13 an IGBT-based converter is installed so that a combination of thyristor-based converters 13A, 13B and of at least one non-thyristor-based converter 13C, 13D is provided, the latter enabling an operation mode at a low current. Reactive power $Q_m$ and active power $P_m$ of the overall electrolysis system 100 are determined at the point of connection POC with a measuring device - that is not shown in detail. The measuring signals for active power $P_m$ and reactive power $Q_m$ are provided to the power plant controller 7. For the active power $P_m$ measured signals are provided to the inverting device 15. The output from the inverting device 15 is provided to the input of the power plant controller 7.

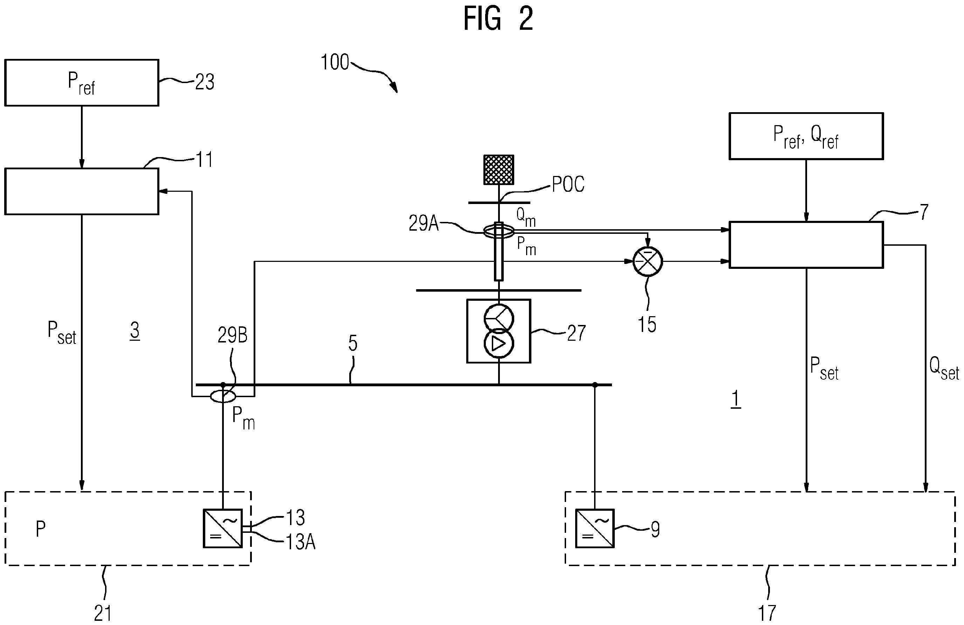

In order to illustrate the control scheme principles and operational method of the invention, FIG 2 shows a simplified overview of an application where a combination of a photovoltaic plant 17 and an electrolysis plant 3 is depicted. Similar as discussed in FIG 1 in the electrolysis system 100 of FIG 2 an electrolysis plant 3 and a photovoltaic plant 17 are connected to a central AC bus bar 5 and form a combined installation that is connected to the public grid at the point of connection POC via a transformer station 27. The reference frame for the overall electrolysis system 100 is provided by the photovoltaic reference values for reactive power $Q_{ref}$ and active power $P_{ref}$ - a power factor reference that is required from the grid operator. The reference values for reactive power $Q_{ref}$ and active power $P_{ref}$ are imported to the power plant controller 7, which - in the present example - is a solar power plant controller. At a metering point 29A that is arranged close to the point of connection POC a measured value for active power $P_m$ and a measured value for reactive power $Q_m$ is determined. For the active power Pm measured signals are provided to the inverting device 15. The output from the inverting device 15 is provided to the input of the power plant controller 7. Further, a measured value for active power $P_m$ of the electrolysis plant 17 is determines at a metering point 29B that is located at the AC bus bar 5 close to the connection point of the AC input of the converter 13 of the electrolyser arrangement 21. Reference value for active power $P_{ref}$ of the electrolysis plant 3 is applied from a predetermined setpoint value 23 for the electrolysis and supplied to the electrolysis active power controller 11 as input. The setpoint for active power $P_{set}$ of the electrolysis is provided from the electrolysis active power controller 11 to the converter arrangement 13. The converter arrangement 13 comprises at least one thyristor-based converter 13A. The setpoint value for active power $P_{set}$ and reactive power $Q_{set}$ of the photovoltaic plant 17 is supplied as output signals respectively to the photovoltaic plant 17. The photovoltaic plant 17 comprises a self-controlled converter 9 and a plurality of photovoltaic modules, that are not shown in detail in FIG 2.

During operation of the electrolysis system 100 the active power P of the electrolysis plant 3 is controlled at the AC bus bar 5 of the electrolysis system 100 as by performing a measurement of the active power P and determining a measured value $P_m$ at the metering point 29B. The reactive power Q is controlled from the power plant controller 7 of the renewable power generation plant 1 - a photovoltaic plant 17 in the present example - at the point of connection POC for the overall electrolysis system 100. To achieve this control-loop the reactive power Q is measured and a measured value for reactive power $Q_m$ is determined and compared with the reference value $Q_{ref}$. As a result, a setpoint value for reactive power $Q_{set}$ is being provided to control and regulate the photovoltaic plant 17 accordingly.

Furthermore - during operation - the active power P of the photovoltaic plant 17 is controlled from the power plant controller 7 at the point of connection POC. This is being achieved through a providing setpoint for the active power $P_{set}$ from the controller 7 as input and controlled performance parameter of the photovoltaic plant 17. In addition, the AC current is measured in connection with the measurement of the active power $P_m$ at the metering point 29B. The opposite value of the AC current is then injected at the input of the power plant controller 7, thereby significantly reducing the harmonics incurred with the thyristor-based converter 13 during operation. With this control configuration and operational method an effective cancellation or filtering effect for harmonics can be advantageously realized. As well as shown in the example of FIG 1 also in this application a storage equipment 25 can be included that is operated such as to reduce the electrical power intake from the public electricity grid at the point of connection POC and allows bidirectional operation for balancing out loading and discharging of the storage equipment 25.

The invention provides a electrolysis system 100 with a control concept incorporated that shows an advantageous separation with an inner control-loops and with an outer control-loops. Within the concept, the active or the reactive power control loops generally represent the outer control loops and the AC current control loops in the dq-reference frame represent the respective inner control loops. The inner-control loops then provide the corresponding firing signals to the converter arrangement 13 that includes thyristor-based converters 13A, 13B. Considering that the inner-control loops are faster than their outer control loops, they can be used for harmonic filtering. The outer-control loops on the other hand can be used to control the flow of active power $P_m$ flow into the electrolysis process, as well as the flow reactive power $Q_m$ separately. Considering this, an effective reactive power compensation can be achieved.

Although the invention has been further illustrated and described in detail by the above examples, the invention is not limited by the disclosed examples, and other variations may be derived therefrom by those skilled in the art without departing from the scope of the invention.

## Claims

1. Electrolysis system (100) comprising a renewable power generation plant (1), an electrolysis plant (3) and an AC bus bar (5), wherein the renewable power generation plant (1) is connected to the public electricity grid at a point of connection (POC) and comprises a power plant controller (7) and a self-controlled converter (9) that is connected to the AC bus bar (5), wherein the electrolysis plant (3) comprises an electrolysis active power controller (11) and a converter arrangement (13) that is connected to the AC bus bar (5), and wherein the electrolysis active power controller (11) is configured for controlling active power (P) of the electrolysis plant (3) at the AC bus bar (5) and the power plant controller (7) is configured for controlling reactive power (Q) at the point of connection (POC).

2. Electrolysis system (100) according to claim 1, wherein the electrolysis active power controller (11) is connected to an AC power input of the power plant controller (7) by means of an inverting device (15), so that compensation of harmonics on the AC bus bar (5) involved from a thyristor-based converter (13A) of the converter arrangement (13) during operation is achieved.

3. Electrolysis system (100) according to claim 1 or 2, wherein the power plant controller (7) and the electrolysis active power controller (9) are configured such that an independent control of active power (P) of the electrolysis plant (3) and of the renewable power generation plant (1) is obtained respectively.

4. Electrolysis system (100) according one of the preceding claims, wherein the converter arrangement (13) of the electrolysis plant (3) comprises a number of thyristor-based converters (13A, 13B, 13C, 13D) that are connected in parallel with their respective AC input to the AC bus bar (5).

5. Electrolysis system (100) according to one of the preceding claims, wherein the electrolysis active power controller (11) is connected to the thyristor-based converters (13A, 13B, 13C, 13D) such that in operation a control of the active power (P) at the respective DC-output of a thyristor-based converter (13A, 13B, 13C, 13D) to a set point ($P_{set}$) of the electrolysis plant (3) is achieved.

6. Electrolysis system (100) according to one of the preceding claims, wherein the renewable power generation plant (1) comprises a photovoltaic plant (17) with a plurality of voltage-source converters (9A, 9B, 9C, 9D, 9E, 9F) connected with their AC-output to the AC bus bar (5).

7. Electrolysis system (100) according to one of the preceding claims, wherein the renewable power generation plant (1) comprises a wind power plant with a wind power plant controller (7) that is configured to provide the requested reactive power (Q) requirement based on their load profile.

8. Electrolysis system (100) according to one of the preceding claims, wherein a storage equipment (25) is installed to provide a back-up power supply such that power intake is reduced from the public electricity grid at the point of connection (POC).

9. Electrolysis system (100) according to one of the preceding claims, wherein in the converter arrangement (13) an IGBT-based converter is installed so that a combination of thyristor-based converters (13A, 13B, 13C, 13D) and of at least one non-thyristor-based converter is provided, the latter enabling an operation mode at a low current.

10. Method for operating an electrolysis system (100) according to one of the preceding claims, wherein the active power (P) of the electrolysis plant (3) is controlled at the AC bus bar (5) of the electrolysis system (100), and wherein the reactive power (Q) is controlled from the power plant controller (7) of the renewable power generation plant (1) at the point of connection (POC) for the overall electrolysis system (100) .

11. Method according to claim 10, wherein the active power (P) of the renewable power generation plant (1) is controlled from the power plant controller (7) at the point of connection (POC).

12. Method according to claim 10 or 11, wherein a storage equipment is provided that is operated such as to reduce the electrical power intake from the public electricity grid at the point of connection (POC).

13. Method according to claim 10, 11 or 12, wherein the AC current is measured, and the opposite value of the AC current is injected at the input of the power plant controller (7), thereby significantly reducing the harmonics incurred with the thyristor-based converter (13) during operation.

# FIG 1

FIG 2

EP 4 498 556 A1

Europäisches
Patentamt

European
Patent Office

Office européen
des brevets

# EUROPEAN SEARCH REPORT

Application Number

EP 23 18 8019

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2013/093194 A1 (BARBACHANO JAVIER PEREZ [ES] ET AL) 18 April 2013 (2013-04-18)<br>* paragraphs [0002], [0025] – [0027], [0036], [0068], [0069] * | 1-13 | INV.<br>H02J3/18<br>H02J3/38 |
| Y | US 2021/399550 A1 (HOWARD DUSTIN [US] ET AL) 23 December 2021 (2021-12-23)<br>* paragraphs [0001] – [0005], [0029]; figure 1 * | 1,6,8, 10-12 | |
| A | CN 213 425 792 U (SHANGHAI LVJUREN AIJUE ENERGY TECH CO LTD)<br>11 June 2021 (2021-06-11)<br>* attached machine translation * | 1-13 | |
| A | US 2012/105023 A1 (SCHAUDER COLIN DAVID [US] ET AL) 3 May 2012 (2012-05-03)<br>* paragraphs [0001], [0006], [0016] * | 1-13 | |
| Y | WO 2021/228770 A1 (SMA SOLAR TECHNOLOGY AG [DE]) 18 November 2021 (2021-11-18)<br>* page 20, last paragraph; figure 1 * | 1,6,8, 10-12 | TECHNICAL FIELDS SEARCHED (IPC)<br><br>H02J |

The present search report has been drawn up for all claims

| Place of search | Date of completion of the search | Examiner |
|---|---|---|
| Munich | 24 January 2024 | Hanisch, Thomas |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

..................................................................................

& : member of the same patent family, corresponding
  document

EPO FORM 1503 03.82 (P04C01)

**EP 4 498 556 A1**

## ANNEX TO THE EUROPEAN SEARCH REPORT
## ON EUROPEAN PATENT APPLICATION NO.

EP 23 18 8019

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2024

| Patent document cited in search report | Publication date | Patent family member(s) | Publication date |
|---|---|---|---|
| US 2013093194 A1 | 18-04-2013 | AU 2010352432 A1 | 15-11-2012 |
| | | BR 112012027402 A2 | 21-11-2017 |
| | | CA 2797893 A1 | 03-11-2011 |
| | | CN 102959131 A | 06-03-2013 |
| | | DK 2565296 T3 | 23-06-2014 |
| | | EP 2565296 A1 | 06-03-2013 |
| | | ES 2474440 T3 | 09-07-2014 |
| | | US 2013093194 A1 | 18-04-2013 |
| | | WO 2011135110 A1 | 03-11-2011 |
| | | ZA 201207595 B | 26-06-2013 |
| US 2021399550 A1 | 23-12-2021 | CN 113824157 A | 21-12-2021 |
| | | EP 3926783 A1 | 22-12-2021 |
| | | US 2021399550 A1 | 23-12-2021 |
| CN 213425792 U | 11-06-2021 | NONE | |
| US 2012105023 A1 | 03-05-2012 | US 2012105023 A1 | 03-05-2012 |
| | | US 2014153302 A1 | 05-06-2014 |
| WO 2021228770 A1 | 18-11-2021 | CN 115552056 A | 30-12-2022 |
| | | DE 102020112880 A1 | 18-11-2021 |
| | | EP 4150134 A1 | 22-03-2023 |
| | | JP 2023525117 A | 14-06-2023 |
| | | US 2023045707 A1 | 09-02-2023 |
| | | WO 2021228770 A1 | 18-11-2021 |

EPO FORM P0459

For more details about this annex : see Official Journal of the European Patent Office, No. 12/82